# EUROPEAN PATENT SPECIFICATION

(11) **EP 3 605 325 B1**
(45) Date of publication and mention of the grant of the patent: **19.10.2022**
(21) Application number: 18843205.8
(22) Date of filing: 19.07.2018
(51) Int. Cl.: G06F 9/445, G06F 9/448, G06F 9/48, G06F 11/07, B60W 50/02, B62D 15/02, B60W 50/00

(54) **VEHICLE CONTROL DEVICE**
FAHRZEUGSTEUERUNGSVORRICHTUNG
DISPOSITIF DE COMMANDE DE VÉHICULE

(30) Priority: 08.08.2017 JP 2017152856
(43) Date of publication of application: 05.02.2020
(73) Proprietor: Hitachi Astemo, Ltd., Hitachinaka-shi, Ibaraki 312-8503 (JP)
(72) Inventor: KASAI Shinya, Tokyo 100-8280 (JP); IMAI Masato, Tokyo 100-8280 (JP); TSUTSUI Takashi, Hitachinaka-shi Ibaraki 312-8503 (JP)
(74) Representative: Manitz Finsterwald Patent- und Rechtsanwaltspartnerschaft mbB
(86) International application number: PCT/JP2018/027039
(87) International publication number: WO 2019/031179

(56) References cited:
- WO-A1-2012/070294
- WO-A1-2014/097442
- JP-A- 2003 202 990
- JP-A- 2014 153 783
- US-A1- 2014 336 818
- US-A1- 2015 134 178
- US-A1- 2016 196 700
- US-A1- 2016 339 925

## Description

### Technical Field

The present invention relates to a vehicle control device which includes a control part which performs state management for multiple parallel function modules which do not affect each other.

### Background Art

Currently, as one of the measures for improving product competitiveness, a platform for products that were individually developed previously is being promoted. Realization of the platform enables reuse of core assets and reduction in development resources. Furthermore, when new functions are expanded to the reused core assets, variations of products can be easily increased according to the number of function combination patterns.

In such a platform concept, there is a technique that provides an environment in which in a computer system having a plurality of input/output devices, the input/output device can be used flexibly by having a combination of a plurality of operating systems and a plurality of processors (see PTL 1).

### Citation List

### Patent Literature

PTL 1: JP 2007-310897 A

US 2014/336818 A1 describes a robotic agricultural vehicle including at least one controller configured to implement a behavior layer and a plurality of finite state machines within an individual robot control architecture (IRCA). The behavior layer uses the finite state machines to generate control commands for various actuators of the robotic agricultural vehicle based on sensed data about the operating environment.

### Summary of Invention

### Technical Problem

The technique disclosed in PTL 1 is considered from the viewpoint of creating diversity and adaptability when executing a single unit of a plurality of independent input/output devices (function module). However, the description is not given about the management of the execution order (state transition) between function modules for creating diversity or the like in movements as a whole system.

A plurality of function modules can operate independently. However, when the system is established or not established depending on the operation order of the input/output devices, it is necessary to control the execution order of all the function modules. For example, in an automatic parking system that automatically parks a vehicle in a parking space of a parking lot, a function module that generates a route for parking and a function module that follows the generated route can operate independently. However, when the latter is not started after completing the former in the control for managing the state of the function module, the automatic parking system fails. For this reason, a management part for managing the state of the function module is indispensable. However, new and individual development for each combination of a plurality of function modules consumes a great deal of development resources, and the platform advantage of easily increasing product variations is halved. In addition, the function modules are implemented to meet the needs of various customers, and in some cases, customers make development independently. There may be a possibility that the customers are not conscious of the operating requirements of the introduced system, or a possibility that the customer's request is newly added to the operation pattern of the existing function module. For this reason, the management part for managing the state of the function module is required to perform complicated and advanced determination and processing.

According to the invention, in order to solve the above-described problems, in the management part that manages the state of the function module, the control part itself has expandability and diversity in order to guarantee the expandability and diversity of the entire platform.

### Solution to Problem

The above problems are solved by a vehicle control device according to independent claim 1. Preferred embodiments are defined by the dependent claims.

### Advantageous Effects of Invention

According to the invention, in the management part that manages the state of the function module, the control part itself has expandability and diversity in order to guarantee the expandability and diversity of the entire platform.

### Brief Description of Drawings

FIG. 1 is a basic configuration diagram of a vehicle control device to which the invention is applied.
FIG. 2 is a schematic configuration diagram of the vehicle control device according to a first embodiment of the invention.
FIG. 3 is a schematic configuration diagram of the vehicle control device according to the first embodiment of the invention.
FIG. 4 is a flowchart for describing an operation of the vehicle control device according to the first embodiment of the invention.
FIG. 5 is a flowchart for describing the operation of the vehicle control device according to the first embodiment of the invention.
FIG. 6 is a flowchart for describing the operation of the vehicle control device according to the first embodiment of the invention.
FIG. 7 is a diagram which is used for describing automatic parking processing according to the first embodiment of the invention.
FIG. 8 is a schematic configuration diagram of a vehicle control device according to a second embodiment of the invention.
FIG. 9 is a schematic configuration diagram of the vehicle control device according to the second embodiment of the invention.
FIG. 10 is a flowchart for describing an operation of the vehicle control device according to the second embodiment of the invention.
FIG. 11 is a flowchart for describing the operation of the vehicle control device according to the second embodiment of the invention.
FIG. 12 is a diagram which is used for describing automatic parking processing according to the second embodiment of the invention.
FIG. 13 is a schematic configuration diagram of a vehicle control device according to a third embodiment of the invention.
FIG. 14 is a flowchart for describing an operation of the vehicle control device according to the third embodiment of the invention.
FIG. 15 is a flowchart for describing the operation of the vehicle control device according to the third embodiment of the invention.
FIG. 16 is a flowchart for describing the operation of the vehicle control device according to the third embodiment of the invention.
FIG. 17 is a flowchart for describing the operation of the vehicle control device according to the third embodiment of the invention.
FIG. 18 is a diagram which is used for describing fail-safe processing during automatic parking according to the third embodiment of the invention.

### Description of Embodiments

Hereinafter, embodiments of the invention will be described. In addition, this invention is not limited to the following embodiment and can be implemented in various embodiments.

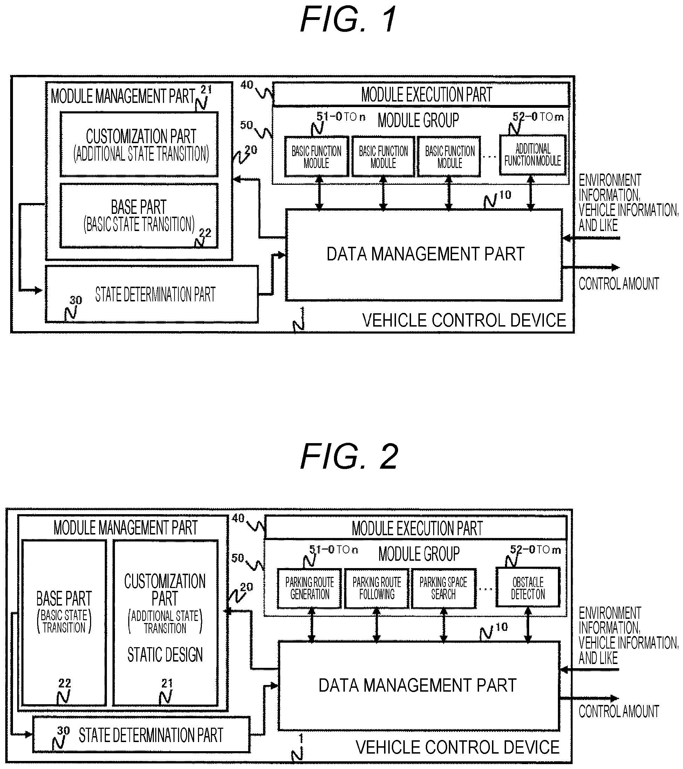

As illustrated in FIG. 1, an automatic parking platform in this embodiment includes an independent module group 50 (basic function module and additional function module), a data management part 10, a module management part 20, a state determination part 30, and a module execution part 40. The basic function module is a core asset to be reused and has a function that is indispensable for establishing a system. The additional function module is not indispensable for establishing the system but has functions necessary for realizing the diversity and expandability of the system.

The data management part 10 is a storage device. In addition to environment information and vehicle information, various data of the function module group 50, the module management part 20, and the state determination part 30 for operating the control device 1 are stored.

The module management part 20 includes a base part 22 and a customization part 21 and determines a state transition command of the function module group 50. The base part 22 outputs a state transition command for operating the basic function defined in advance on the basis of the data from the data management part 10. The customization part 21 outputs a state transition command for operating the additional function. The module management part 20 outputs the state transition command from the base part 22 and the state transition command from the customization part 21 to the state determination part 30.

The state determination part 30 receives the state transition command from the module management part 20 as an input, determines a current state on the basis of a definition file, and determines whether to start and stop the function module group 50. In the definition file, a correspondence between an action index and an additional action index, and the start command or the stop command for each function module is described. When the definition file is redefined, the state determination part outputs a start command or a stop command for each function module based on the redefined rule.

The module execution part 40 calls all function module groups without depending on the current state. The called function module group 50 reads the start command and the stop command determined by the state determination part 30 from the data management part 10.

As described above, when reusability and expandability are added not only in the combination of function modules but also in the order of operation of the function modules, it is possible to develop a wide variety of products with the effect of reducing the number of product development steps.

### (First Embodiment)

In this embodiment, the customization part 21 based on static design is provided.

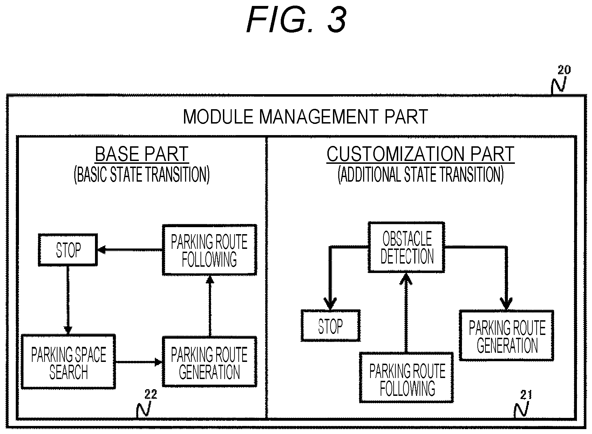

A schematic configuration diagram of the vehicle control device 1 according to a first embodiment is illustrated in FIGS. 2 and 3. When an automatic parking system is taken as an example, FIG. 2 illustrates a configuration in which the function module group 50 is replaced with a function for realizing the automatic parking system on the basis of the basic structure of FIG. 1. FIG. 3 illustrates a configuration in which the basic state transition of the base part 22 of the module management part 20 and the additional state transition of the customization part 21 in the basic structure of FIG. 1 are replaced with specific respective state transitions.

The acquisition of environment information for the vehicle control device according to the first embodiment will be described. As an example, a camera is used as a device used for acquiring environment information. A stereo camera is a device for acquiring information related to the surrounding environment of an own vehicle and can photograph the front side of the own vehicle while measuring the distance. Four monocular cameras can photograph the surrounding environment of the front side, rear side, right side, and left side of the own vehicle, respectively. These devices are used to detect stationary solid objects, moving objects, road surface paint such as lane markings and frame lines, and the like around the own vehicle. The stationary solid object indicates a parked vehicle, a wall, a pylon, a utility pole, a car stop, or the like. The moving object indicates a pedestrian, a bicycle, a motorcycle, another vehicle, or the like. The shape and position of the target object are detected using a known technique. The acquired environment information is output to the data management part 10 by a dedicated line or CAN. In addition, a laser radar, a millimeter wave radar, or a sonar is used in devices other than cameras for acquiring environment information. The distance to the object is measured using a laser radar, a millimeter wave radar, or a sonar, and the acquired information is output to the data management part 10 using a dedicated line or CAN.

The function module group 50 in FIG. 2 is a set of function modules for executing the automatic parking function in the vehicle control device. A function module for searching a parking space, a function module for generating a parking route, a function module for following the generated route, a function module for detecting obstacles, and the like are included with environment information (such as environment recognition information around the vehicle) and vehicle information used as inputs.

The function module for searching for a parking space receives environment information such as the stationary solid object and the parking frame line output to the data management part. A space where the own vehicle can be parked is searched from the input, and the available parking space is output to the data management part 10.

In the function module that generates the parking route, target parking position information that is one of the environment information such as stationary solid objects, moving objects and parking frame lines output to the data management part and the available parking space searched by the function module that searches the parking space is used as an input. The parking route from the current position to the target position is generated from the input, and the generated parking route is output to the data management part 10.

In the function module for detecting an obstacle, the environment information such as stationary solid objects or moving objects output to the data management part is used as an input. An obstacle that may affect the movement of the own vehicle is searched from the input, and the obstacle information is output to the data management part 10.

In the function module that follows the route, the parking route generated by the function module that generates the parking route and the obstacle information generated by the function module that detects the obstacle are used as inputs. A follow-up control is executed from the input, and a control amount for vehicle motion control is output to the data management part 10.

The base part 22 of FIG. 3 has the state of stopping the vehicle (stop), the state of operating a function module for searching a parking space (parking space search), the state of operating a function module for generating a parking route (parking route generation), the state of operating a function module for following the generated route (parking route following), and a transition condition for outputting a state transition command for transitioning these states in the order for realizing the basic function of automatic parking. In addition, the order for realizing the basic function of automatic parking follows the state of stopping the vehicle, the state of operating the function module for searching a parking space, the state of operating the function module for generating a parking route, and the state of operating the function module for following the generated route.

The customization part 21 in FIG. 3 has the state of stopping the vehicle (stop), the state of searching an obstacle (obstacle detection), the state of operating a function module for generating a parking route (parking route generation), the state of operating a function module for following the generated route (parking route following), and a transition condition for outputting a state transition command for transitioning these states in the order for realizing the additional function of automatic parking. In addition, the order for realizing the additional function of automatic parking follows the state of operating the function module of following the route, the state of searching the obstacle, and the state of stopping the vehicle or the state of operating the function module for generating a parking route.

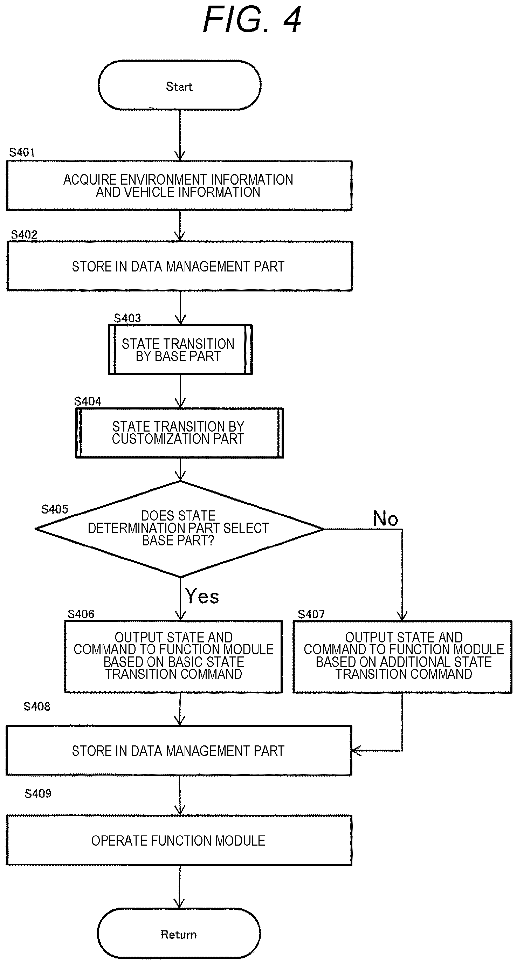

Next, a processing procedure of the vehicle control device 1 will be described using a flowchart. The procedure of processing executed by the vehicle control device 1 will be described with reference to the flowcharts of FIGS. 4 to 6.

In process S401 of FIG. 4, the environment information and the vehicle information are acquired, and the procedure proceeds to process S402. The environment information here is environment recognition information around the own vehicle, and the vehicle information is information such as the vehicle speed and the turning angle of the own vehicle.

In process S402, the information acquired in process S401 is stored in the data management part 10, and the procedure proceeds to process S403.

In process S403, the state transition condition of the base part 22 is determined using the current state and the environment information and the vehicle information acquired in process S402, and the state transition command is output to the state determination part 30. The procedure proceeds to process S404.

In process S404, the state transition condition of the customization part 21 is determined using the environment information and the vehicle information acquired in process S402, and the state transition command is output to the state determination part 30. The procedure proceeds to process S405.

In process S405, it is determined whether or not the state determination part 30 selects the state transition command of the base part from the state transition commands output in processes S403 and S404 on the basis of the definition file. In a case where it is determined that the state transition command from the base part is selected, the procedure proceeds to process S406, and in a case where it is determined that the state transition command from the base part is not selected, the procedure proceeds to process S407.

In process S406, the state determination part 30 outputs the current state and the start command and the stop command for the function module group 50 to the data management part 10 on the basis of the basic state transition command acquired in process S405. The procedure proceeds to process S408.

In process S407, the state determination part 30 outputs the current state and the start command and the stop command for the function module group 50 to the data management part 10 on the basis of the additional state transition command acquired in process S405. The procedure proceeds to process S408.

In process S408, the current state output from processes S406 or S407 and the start command and the stop command for the function module group 50 are stored in the data management part 10, and the procedure proceeds to process S409.

In process S409, the function module group 50 called by the module execution part 40 executes starting and stopping on the basis of the data stored in process S408 and finishes a series of processes. The procedure returns to process S401.

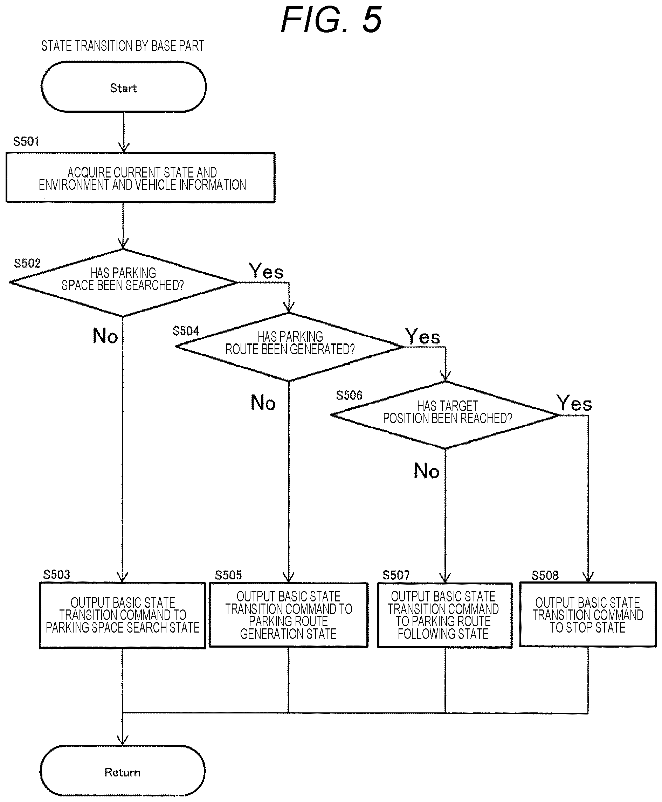

The procedure of the process executed by the base part 22 of the module management part 20 in process S403 of FIG. 4 will be described with reference to the flowchart of FIG. 5.

In process S501 of FIG. 5, the current state, the environment information, and the vehicle information are acquired from the data management part 10. The procedure proceeds to process S502.

In process S502, it is determined whether or not the parking space for automatic parking has been searched on the basis of the information acquired in process S501. In a case where it is determined that the parking space has been searched, the procedure proceeds to process S504, and in a case where it is determined that the parking space is not searched, the procedure proceeds to process S503.

In process S503, the basic state transition command for executing a parking space search is output, and the process ends.

In process S504, it is determined whether or not the parking route has been generated on the basis of the information acquired in process S501. In a case where it is determined that the parking route has been generated, the procedure proceeds to process S506, and in a case where it is determined that the parking route is not generated, the procedure proceeds to process S505.

In process S505, the basic state transition command for executing the parking route generation is output, and the process ends.

In process S506, it is determined whether or not the target position has been reached on the basis of the information acquired in process S501. In a case where it is determined that the target position has been reached, the procedure proceeds to process S508, and in a case where it is determined that the target position is not reached, the procedure proceeds to process S507.

In process S507, the basic state transition command for executing the parking route following is output, and the process ends.

In process S508, the basic state transition command for executing stopping is output, and the process ends.

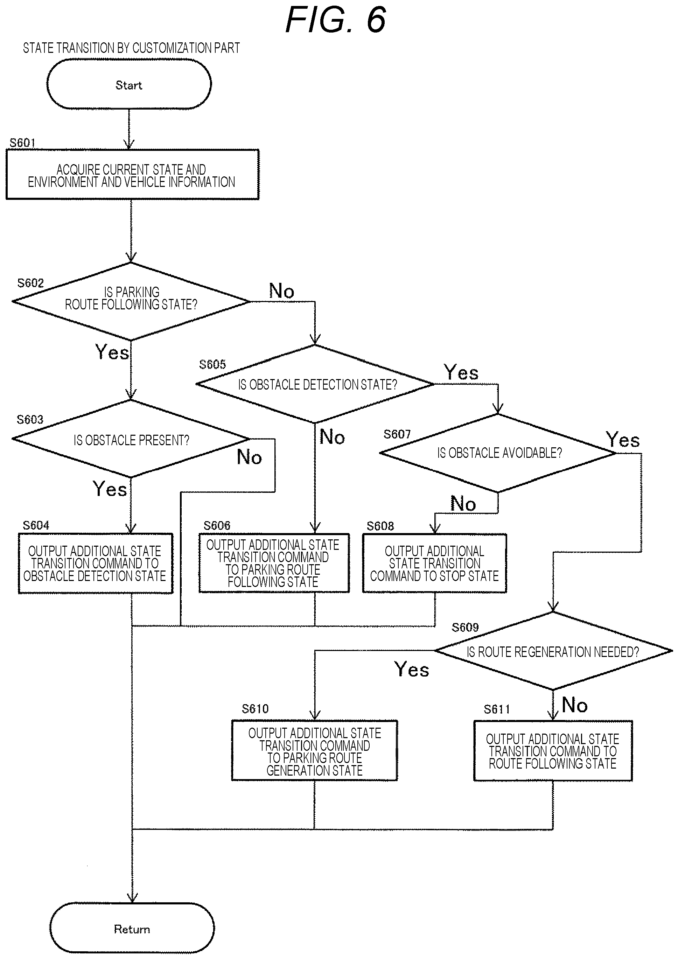

The procedure of the process executed by the customization part 21 of the module management part 20 in process S404 of FIG. 4 will be described with reference to the flowchart of FIG. 6.

In process S601 of FIG. 6, the current state, the environment information, and the vehicle information are acquired from the data management part 10. The procedure proceeds to process S602.

In process S602, it is determined whether or not the parking route is followed on the basis of the information acquired in process S601. In a case where it is determined that the parking route is followed, the procedure proceeds to process S603, and in a case where it is determined that the parking route is not followed, the procedure proceeds to process S605.

In process S603, it is determined whether or not an obstacle is present on the basis of the information acquired in process S601. In a case where it is determined that an obstacle is present, the procedure proceeds to process S604, and in a case where it is determined that an obstacle is not present, the process ends.

In process S604, the additional state transition command for detecting the obstacle is output, and the process ends.

In process S605, it is determined whether or not the obstacle is detected on the basis of the information acquired in process S601. In a case where it is determined that the obstacle is detected, the procedure proceeds to process S606, and in a case where it is determined that the obstacle is not present, the process ends.

In process S606, it is determined whether or not an obstacle is avoidable on the basis of the information acquired in process S601. In a case where it is determined that an obstacle is avoidable, the procedure proceeds to process S608, and in a case where it is determined that an obstacle is unavoidable, the procedure proceeds to process S607.

In process S607, the additional state transition command for executing stopping is output, and the process ends.

In process S608, the additional state transition command for executing route generation to avoid the obstacle is output, and the process ends.

As described above, when function modules are combined variously, a state transition can be formed to realize a reduction in development cost by reusing the base part and a flexible response by developing the customization part.

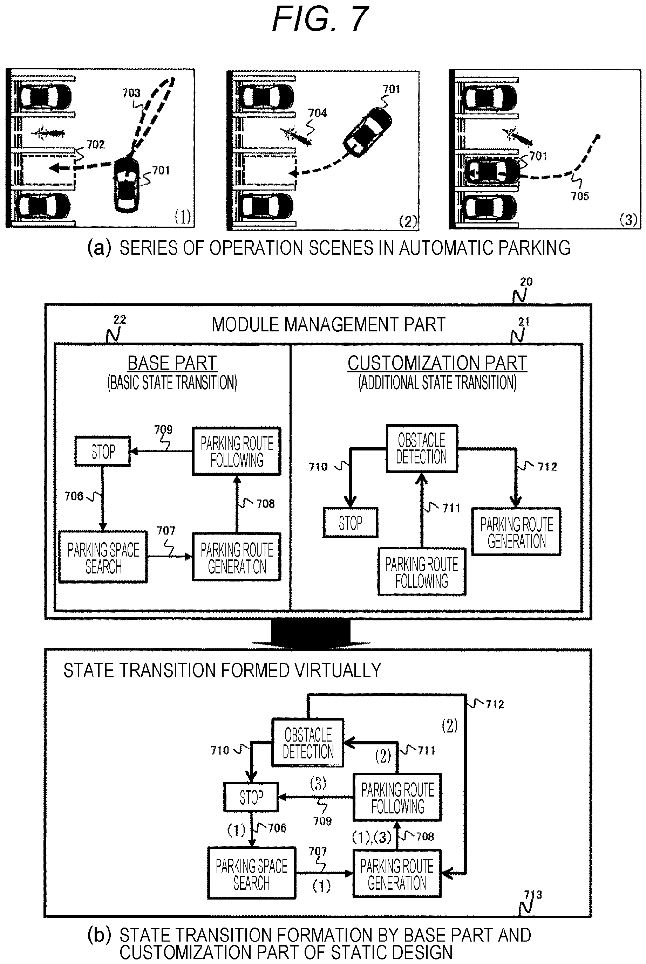

Next, the processing described in FIGS. 2 to 6 is described as an example using automatic parking by using FIG. 7.

FIG. 7 is a scene in which the first embodiment of the invention is specifically executed, and two illustrations are given about (a) a scene of the vehicle operation of automatic parking and (b) a state transition formed by the module management part.

FIG. 7(a) is a situation explanatory diagram assuming a scene in which an automobile is automatically parked, and the scene transitions in the order of (1), (2), and (3).

As scene (1), an own vehicle 701 transitions from the stop state to the parking space search state on the basis of the basic state transition of the base part 22 and executes the parking space search. When the target parking space 702 is determined, a transition is made from the parking space search state to the parking route generation state, and the parking route generation is executed. When the parking route 703 is generated, a transition is made from the parking route generation state to the parking route following state, and the route following is executed on the basis of the parking route 703. Thereafter, as scene (2), when the own vehicle 701 acquires obstacle information 704, a transition is made from the parking route following state to the obstacle detection state on the basis of the additional state transition of the customization part 21. Finally, as scene (3), in a case where it is determined that the obstacle is avoidable, if there is no need for avoidance, the own vehicle 701 returns to the route following state. On the other hand, if there is a need for avoidance, a transition is made from the obstacle detection state returning to the parking route regeneration state to the parking route generation state, and a new route generation 705 is executed in consideration with obstacle avoidance.

FIG. 7(b) is a view illustrating a desired state transition virtually formed when the basic state transition by the base part 22 and the additional state transition designed in advance by the customization part 21 are integrated by the state determination part 30, and a virtually formed state transition 713 corresponds to the scene of FIG. 7(a).

In a case where the own vehicle 701 operates only with the basic state transition of the base part 22, the own vehicle 701 has four state transition conditions of a state transition condition 706 from the stop to the parking space search, a state transition condition 707 from the parking space search to the parking route generation, a state transition condition 708 from the parking route generation to the parking route following, and a state transition condition 709 from the parking route following to the stop, and thus only the scene (1) is realized. When the additional state transition of the customization part 21 is added thereto, three state transition conditions of a state transition condition 710 from the obstacle detection to the stop, a state transition condition 711 from the parking route following to the obstacle detection, and a parking route generation 712 from the obstacle detection are added to enable the transition from the scene (1) to the scene (2) and the transition from the scene (2) to the scene (3). Eventually, the own vehicle realizes the same operation as that of the desired state transition.

As described above, when the basic function is secured by the base part 22, and functions are added by the customization part 21, a flexible state transition for various functions can be formed without changing the state transition of the basic function.

### (Second Embodiment)

This embodiment has a configuration including a customization part based on dynamic design.

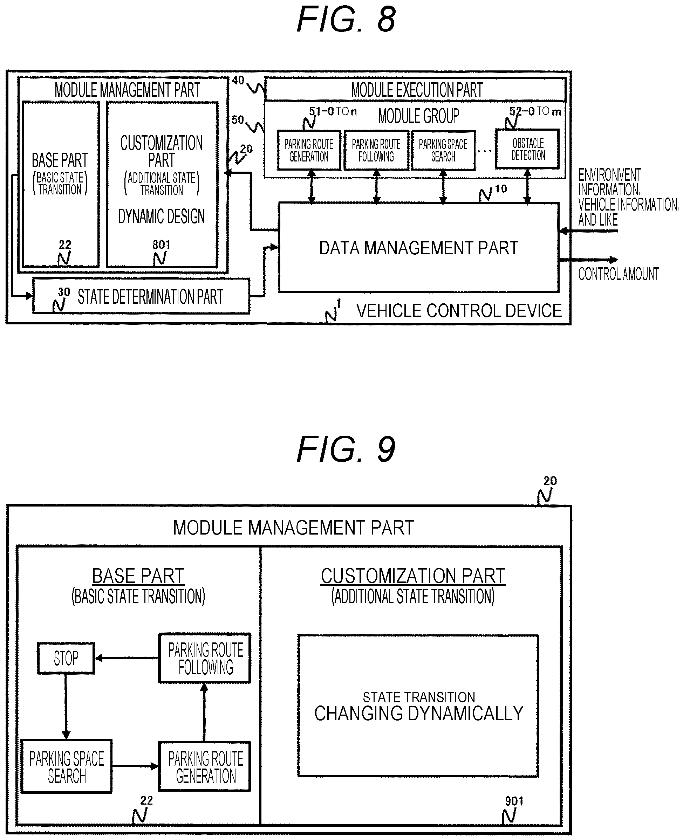

A schematic configuration diagram of the vehicle control device 1 according to a second embodiment is illustrated in FIGS. 8 and 9. FIG. 8 illustrates a configuration in which the customization part in the basic structure of FIG. 1 is replaced with dynamic design, and the function module group 50 is replaced with specific functions. FIG. 9 is a configuration in which the basic state transition of the base part 22 of the module management part 20 in the basic structure of FIG. 1 is replaced with a specific state transition, and the additional state transition of the customization part 901 is changed to a dynamically changing state transition.

The function module group 50 in FIG. 8 is a set of function modules for executing the automatic parking function in the vehicle control device. A function module for searching a parking space, a function module for generating a parking route, a function module for following the generated route, a function module for detecting obstacles, and the like are included with environment information (such as environment recognition information around the vehicle) and vehicle information used as inputs.

The base part 22 of FIG. 9 has a state transition designed in advance to output a state transition command for operating a function module for searching for a parking space, a function module for generating a parking route, and a function module for following the generated route in the order for realizing the basic functions of automatic parking.

The customization part 901 in FIG. 9 has a dynamically changing state transition in order to output a state transition command for operating each function module for realizing the additional function of automatic parking. The dynamic change herein means that a new state transition that did not exist at the time of initial design appears due to artificial intelligence or machine learning.

Next, a processing procedure of the vehicle control device 1 will be described using a flowchart.

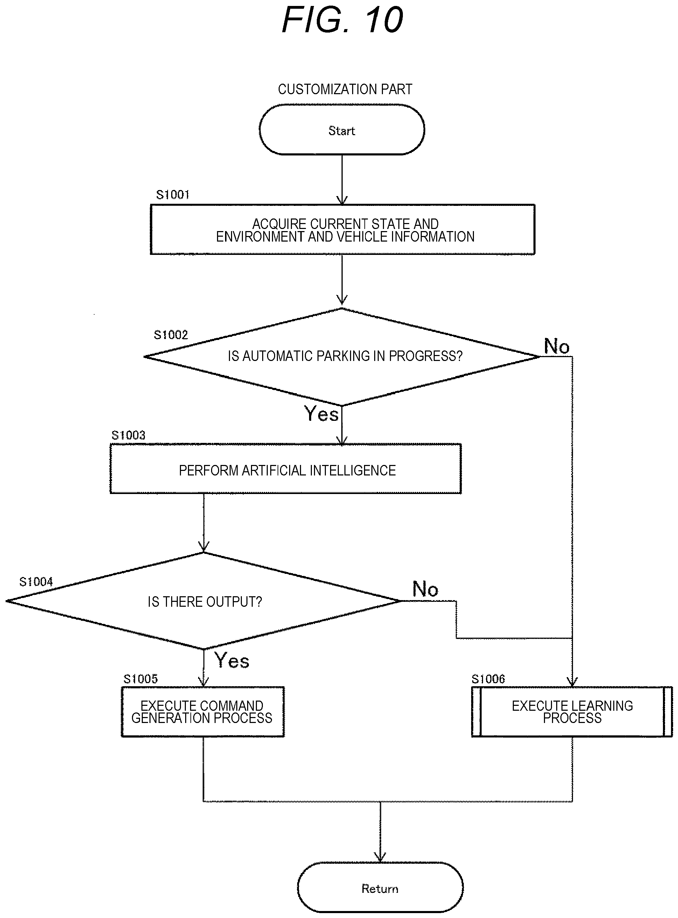

The flowchart according to the second embodiment of the invention is the same as the flowchart of FIG. 4 according to the first embodiment of the invention in all parts except for process S404. The processing order of the customization part 901 (having dynamically changing state transition) that is different from the process S404 in the flowchart in FIG. 4 will be described with reference to the flowchart in FIG. 10.

In process S1001 of FIG. 10, the current state, the environment information, and the vehicle information are acquired from the data management part 10. The procedure proceeds to process S1002.

In process S1002, it is determined whether or not automatic parking is in progress on the basis of the information acquired in process S1001. In a case where it is determined that automatic parking is in progress, the procedure proceeds to process S1003, and in a case where it is determined that automatic parking is not in progress, the procedure proceeds to process S1006.

In process S1003, a determination by artificial intelligence is performed as a dynamic determination on the basis of the information acquired in process S1001, and the procedure proceeds to process S1004. The artificial intelligence is just an example, and machine learning is also applicable.

In process S1004, it is determined whether or not there is an output by artificial intelligence on the basis of the information acquired in process S1003. In a case where it is determined that there is an output, the procedure proceeds to process S905, and in a case where it is determined that there is no output, the procedure proceeds to process S1006.

In process S1005, the output from the artificial intelligence is output as a state transition command, and the process ends.

In process S1006, a learning process is executed, and the process ends.

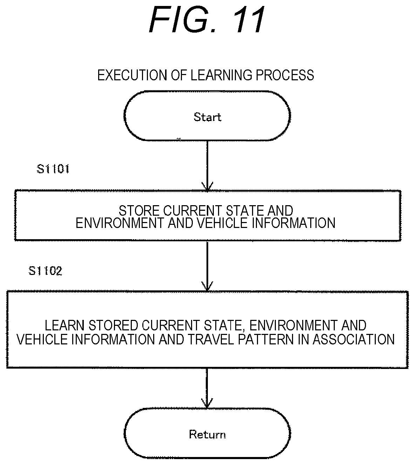

FIG. 11 is a flowchart illustrating an example of the processing procedure of the learning process in process S1006 of FIG. 10.

In process S1101 of FIG. 11, the current state, the environment information, and the vehicle information are stored. The procedure proceeds to process S1102.

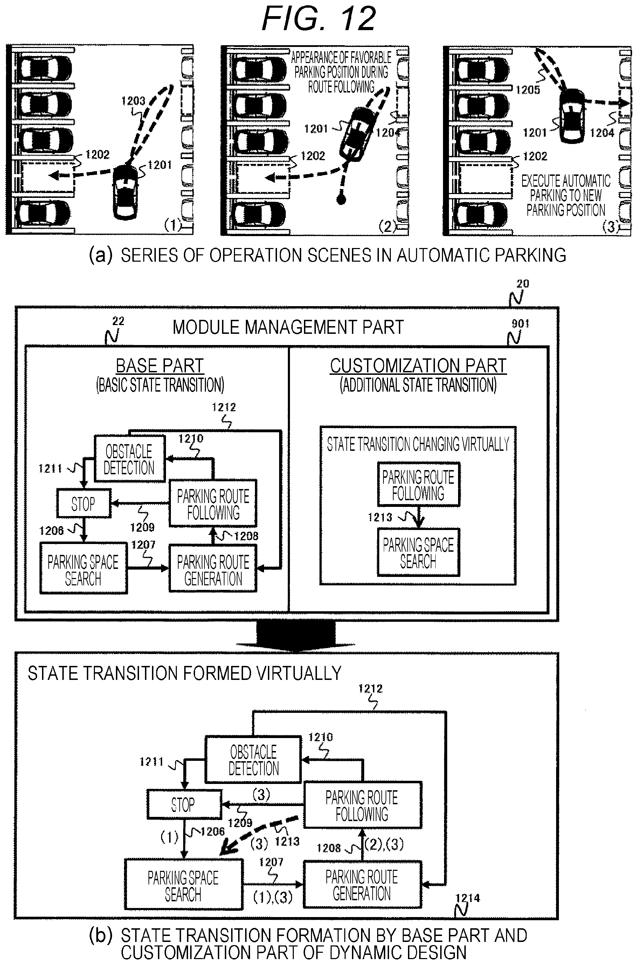

In process S1102, the information stored in process S1101 and the travel pattern to be executed are learned in association, and the process ends. The following is an example of the content to be learned.
- Determination of changing the target parking position to a newly discovered parking space.
- The method of taking safety margin and adjusting speed when avoiding obstacles
- Speed at the turn. Next, the processing explained in FIGS. 8 to 11 is described as an example using automatic parking by using FIG. 12.

FIG. 12 is a scene in which the second embodiment of the invention is specifically executed, and two illustrations are given about (a) a scene of the vehicle operation of automatic parking and (b) a state transition formed by the module management part 20.

FIG. 12(a) is a situation explanatory diagram assuming a scene in which an automobile is automatically parked, and the scene transitions in the order of (1), (2), and (3).

As scene (1), an own vehicle 1201 transitions from the stop state to the parking space search state on the basis of the basic state transition of the base part 22 and executes the parking space search. When the target parking space 1202 is determined, a transition is made from the parking space search state to the parking route generation state, and the parking route generation is executed. When the parking route 1203 is generated, a transition is made from the parking route generation state to the parking route following state, and the route following is executed on the basis of the parking route 1203. After that, as scene (2), on the basis of the additional state transition of the customization part 21 based on the transition condition generated by the artificial intelligence, a transition is made from the parking route following state to the parking space search state, and the own vehicle 1201 acquires new parking position information to determine the target parking space 1204. Lastly, as scene (3), when the target parking space 1204 is determined, a transition is made from the parking space search state to the parking route generation state, and parking route generation is executed. When the parking route 1205 is generated, a transition is made from the parking route generation state to the parking route following state, and the route following is executed on the basis of the parking route 1205.

FIG. 12(b) is a view illustrating a desired state transition virtually formed when the basic state transition by the base part 22 and the additional state transition designed dynamically by the customization part 21 are integrated by the state determination part 30, and a virtually formed state transition 1214 corresponds to the scene of FIG. 12(a).

In a case where the own vehicle 1201 operates only with the basic state transition of base part 22, the own vehicle 1201 has seven transition conditions of a state transition condition 1206 from the stop to the parking space search, a state transition condition 1207 from the parking space search to the parking route generation, a state transition condition 1208 from the parking route generation to the parking route following, a state transition condition 1209 from the parking route following to the stop, a state transition condition 1210 from the parking route following to the obstacle detection, a state transition condition 1211 from the obstacle detection to the stop, and a state transition condition 1212 from the obstacle detection to the parking route generation, and thus only the scene (1) is realized. When the additional state transition of the customization part 21 is added thereto, a state transition condition 1213 from the parking route following to the parking space search is dynamically added to enable the transition from scene (1) to scene (2). Finally, the scene (3) is realized by operating with the basic state transition of the base part 22.

As described above, a state transition can be formed to realize dynamic flexibility such as securing of basic functions by the base part 22 and personal adaptation by the customization part 21.

### (Third Embodiment)

This embodiment relates to fail safe.

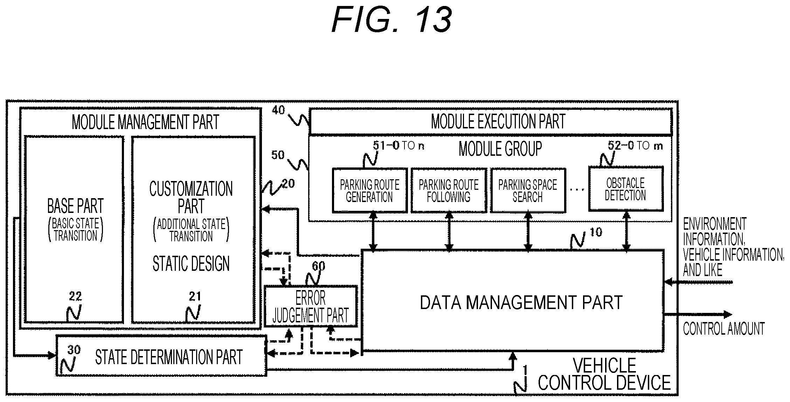

A schematic configuration diagram of the vehicle control device 1 according to a third embodiment is illustrated in FIG. 13. FIG. 13 illustrates a configuration in which an error judgement part 60 is added to the basic structure of FIG. 1.

When the data stored in the data management part 10 exceeds a prescribed range, the error judgement part 60 in FIG. 13 discriminates the current state as an abnormal state and determines the type of the abnormality. In addition, the state determination part 30 is redefined according to the type of the abnormality.

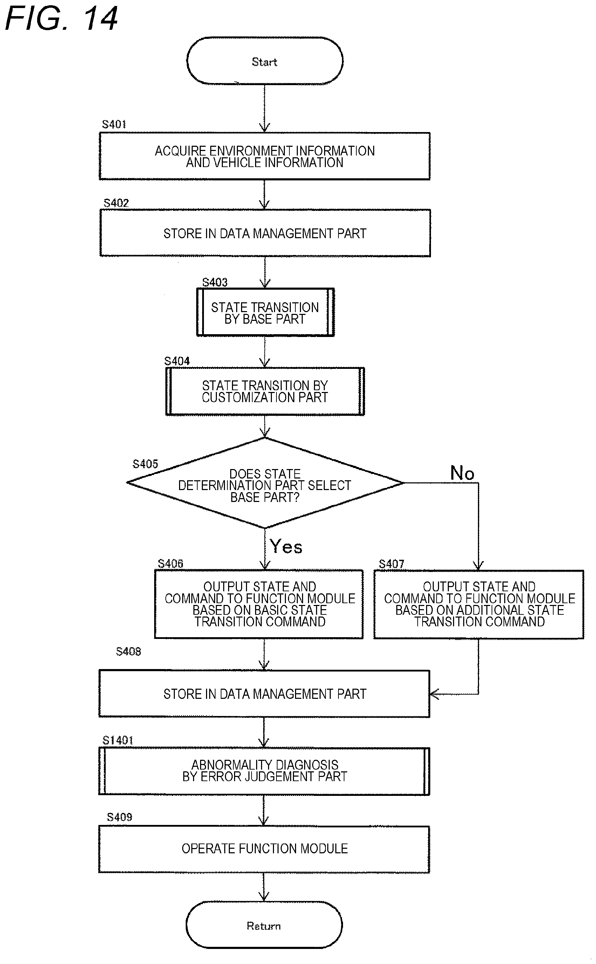

Next, the processing procedure of the error judgement part 60 of the vehicle control device 1 will be described using a flowchart. The processing procedure executed by the error judgement part 60 will be described with reference to the flowcharts of FIGS. 14 to 18.

A difference from the flowchart of FIG. 4 according to the first embodiment of the invention is that, in process S1401 of FIG. 14 in which the processing order of the error judgement part 60 is described with reference to the flowchart of FIG. 14, an abnormality diagnosis is performed with reference to the data information stored in the data management part 10 in process S408, and the procedure proceeds to process S409.

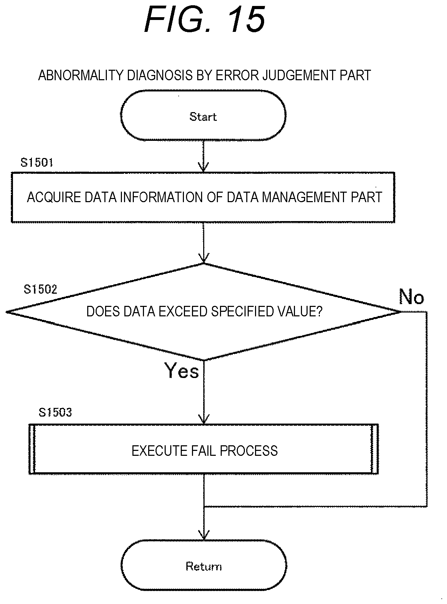

FIG. 15 illustrates the abnormality diagnosis by the error judgement part 60.

In process S1501 of FIG. 15, the data information of the data management part 10 is acquired, and the procedure proceeds to process S1502.

In process S1502, it is determined whether or not the acquired information exceeds the specified value on the basis of the information acquired in process S1501. In a case where it is determined that the acquired information exceeds the specified value, the procedure proceeds to process S1503, and in a case where it is determined that the acquired information does not exceed the specified value, the process ends.

In process S1503, a fail process is performed, and the process ends.

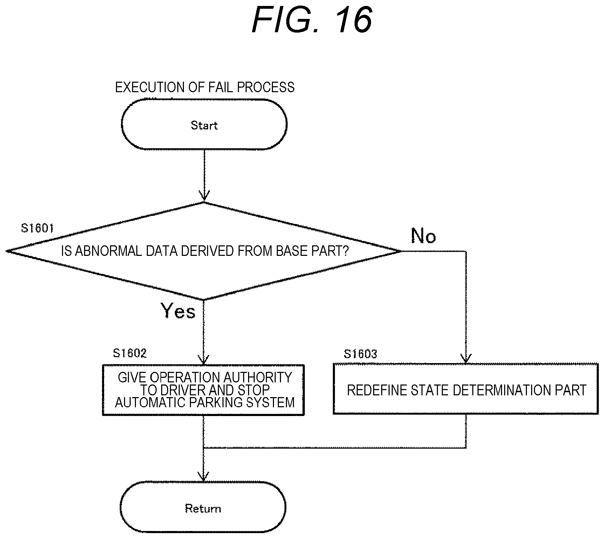

FIG. 16 is a flowchart illustrating an example of the processing procedure of the fail process in process S1503 of FIG. 15.

In process S1601 of FIG. 16, it is determined whether or not the abnormal data is derived from the base part on the basis of the information acquired in process S1501 of FIG. 15. In a case where it is determined that the abnormal data is derived from the base part, the procedure proceeds to process S1602, and in a case where it is determined that the abnormal data is not derived from the base part, the procedure proceeds to process S1603.

In process 1602, the operation authority is given to the driver, the control for the steering wheel and acceleration/deceleration is stopped, the automatic parking system is stopped, and the process ends.

In process 1603, the state determination part 30 is redefined such that only the state transition command from the base part 22 is determined as the final state transition, and the process ends.

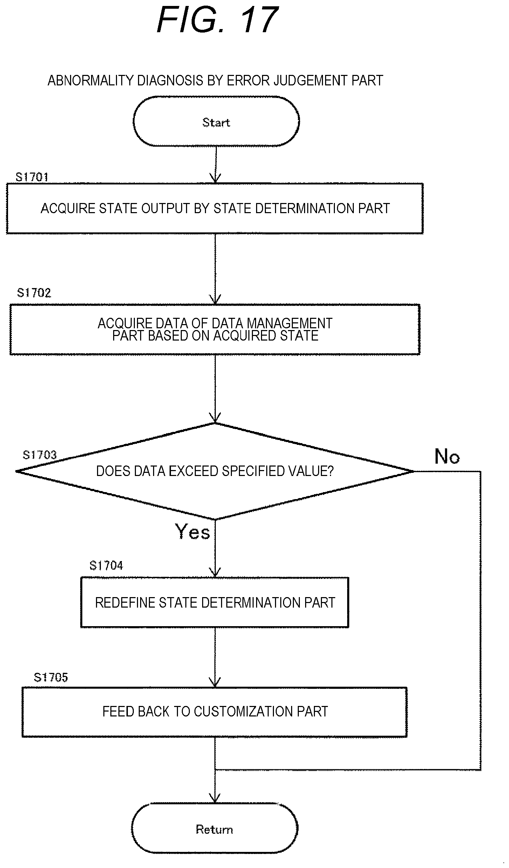

FIG. 17 illustrates failure diagnosis by the error judgement part 60 in the case of being provided with a dynamic design customization part.

In process S1701 of FIG. 17, the state output by the state determination part 30 is acquired, and the procedure proceeds to process S1702.

In process S1702, the data of the corresponding part to be updated in the data management part 20 is specified based on the state acquired from the state determination 30, the data of the corresponding part is acquired, and the procedure proceeds to process S1703.

In process S1703, it is determined whether or not the acquired information exceeds the specified value on the basis of the information acquired in process S1702. In a case where it is determined that the acquired information exceeds the specified value, the procedure proceeds to process S1704, and in a case where it is determined that the acquired information does not exceed the specified value, the process ends.

In process S1704, the state determination part 30 is redefined such that only the state transition command from the base part 22 is determined as the final state transition, and the procedure proceeds to process S1705.

In process S1705, learning is promoted by feeding back to the customization part 21 that the current state transition command is inappropriate, and the process ends.

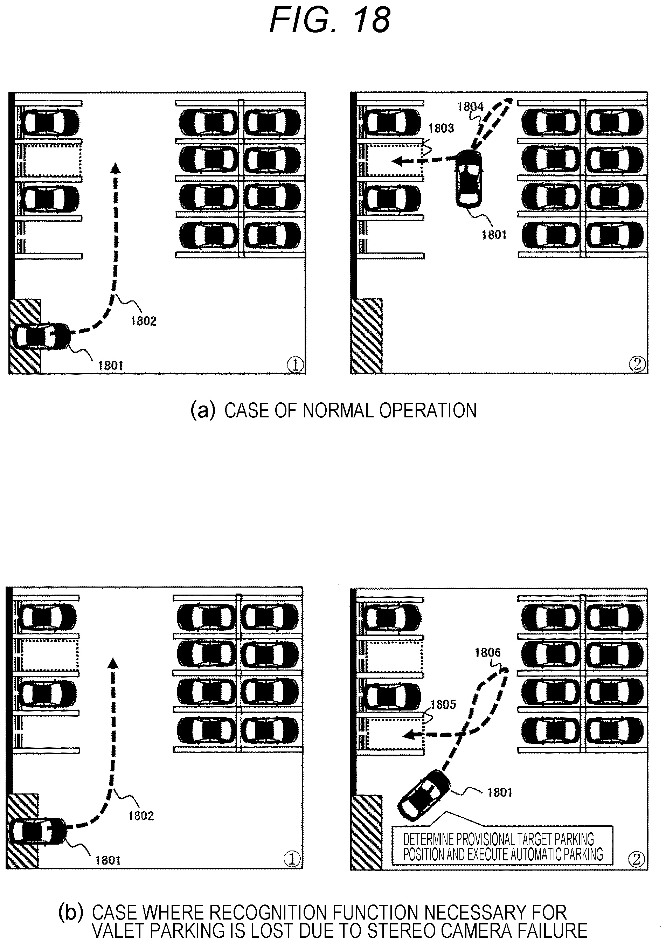

Next, the processing described with reference to FIGS. 15 and 16 will be described as an example using automatic parking including valet parking by using FIG. 18. This valet parking indicates a series of automatic operations of movements within a parking lot, search for an available parking space, and parking in the available parking space.

FIG. 18 is a scene in which FIG. 16 is concretely executed according to FIG. 15 and illustrates (a) a normal operation scene and (b) a scene in which a recognition function necessary for valet parking is lost due to a stereo camera failure.

In FIG. 18(a), with the addition of the valet parking function, an own vehicle 1801 performs movement to the target parking space by automatic driving along a route 1802 moving in the parking lot. In a case where the valet parking function is normally executed, after reaching the vicinity of the target parking space, a transition is made to the parking space search state, and the parking space search is executed. When the target parking space 1803 is determined, a transition is made from the parking space search state to the parking route generation state, and the parking route generation is executed. When the parking route 1804 is generated, a transition is made from the parking route generation state to the parking route following state, the route following is executed on the basis of the parking route 1804, and the parking in the target parking space 1803 is completed.

In FIG. 18(b), the stereo camera necessary for valet parking of the own vehicle 1801 is failed so that and the necessary recognition function is lost, and thus the error judgement part 60 redefines the state determination part 30. The redefined state determination part 30 selects an operation based only on the basic state transition of the base part 22. A transition is made to the parking space search state, and the parking space search is executed in order to determine the provisional target parking position. When the target parking space 1805 is determined, a transition is made from the parking space search state to the parking route generation state, and the parking route generation is executed. When the parking route 1806 is generated, a transition is made from the parking route generation state to the parking route following state, the route following is executed on the basis of the parking route 1806, and the parking in the target parking space 1805 is completed.

As described above, the error judgement part 60 can perform an emergency response to a system trouble.

The following description is possible from each embodiment.

In an automatic driving device provided with a control program which inputs environment information and vehicle information and outputs a control amount to a vehicle, a control flow is classified into basic state transition and additional state transition and is configured by a base part which performs basic state transition on the basis of data from the data management part 10, a customization part which performs additional state transition on the basis of the data from the data management part, and a state determination part 30 which determines the classified state transitions to one. Further, the customization part which performs the additional state transition has a static design case and a dynamic design case. As for the state transition of the static design, an additional state transition is designed in advance. As for the state transition of dynamic design, an additional state transition is newly designed by learning repeated operations using artificial intelligence or machine learning.

According to each embodiment, even when focus is made on the entire system using the function module groups as well as the degree of freedom of the combination of function module groups, only by reusing the base part of the module management part to newly develop the customization part, a control flow corresponding to various combinations of function modules is realized while suppressing development resources. Thus, it is possible to sufficiently obtain the advantages of the platform. Furthermore, the state transition appropriate for the user can be realized by repeating the operation by the state transition of dynamic design.

### Reference Signs List

- 1: vehicle control device
- 10: data management part
- 20: module management part
- 21: customization part
- 22: base part
- 30: state determination part
- 40: module execution part
- 50: Module group

## Claims

1. A vehicle control device (1) which includes a plurality of module groups (50) wherein a module group (50) comprises at least a basic function module (51-0) and an additional function module (52-0), and a data management part (10) which manages data of the module groups (50), the vehicle control device (1) comprising:
a module management part (20) which includes a base part (22) which outputs a state transition command for operating a predetermined basic function on a basis of data from the data management part (10) and a customization part (21) which outputs a state transition command for operating an additional function;
a state determination part (30) which determines a current state of a function module of the module groups (50) by selecting or not selecting the state transition command from the base part (22) and the state transition command from the customization part (21) based on a definition file, determines a start command or a stop command of the module group (50) on a basis of the determined state, and outputs the command to the data management part (10); and
a module execution part (40) which calls all module groups (50),
wherein the called module group (50) reads the start command and the stop command determined by the state determination part (30) from the data management part (10) and executes starting and stopping with reference to the start command or the stop command.

2. The vehicle control device (1) according to claim 1, wherein a final state transition is formed on a basis of the state transition command of the base part (22) and the state transition command of the customization part (21).

3. The vehicle control device (1) according to claim 2, wherein the state determination part (30) outputs a current state, and a module start command and a stop command to the data management part (10).

4. The vehicle control device (1) according to claim 1, wherein the basic function by the base part (22) operates independently.

5. The vehicle control device (1) according to any one of claims 1 to 4, wherein
the base part (22) has a state transition designed in advance to output the state transition command for operating the basic function,
the customization part (21) has a state transition designed in advance to output the state transition command for operating the additional function, and
a predetermined final state transition is formed by virtually integrating the state transition of the base part (22) and the state transition of the customization part (21) by the state determination part (30).

6. The vehicle control device (1) according to any one of claims 1 to 4, wherein
the base part (22) has a state transition designed in advance to output the state transition command for operating the basic function,
the customization part (21) has a state transition changing dynamically, and
a desired final state transition is formed by virtually integrating the state transition of the base part (22) and the state transition of the customization part (21) by the state determination part (30).

7. The vehicle control device (1) according to claim 6, wherein the dynamically changing state transition of the customization part (21) is an artificial intelligence or a learning function.

8. The vehicle control device (1) according to claim 7, wherein the state determination part (30) determines the state transition of the customization part (21) as a final state transition with respect to a situation that the state transition is not defined as the state transition of the base part (22).

9. The vehicle control device (1) according to any one of claims 1 to 4, further comprising,
when data of the data management part (10) deviates from a prescribed range, an error judgement part (60) which detects an abnormality of the module management part (20) and the data management part (10) and discriminates a type of the abnormality.

10. The vehicle control device (1) according to claim 9, wherein, when the error judgement part (60) determines that the data management part (10) is in an abnormal state on a basis of the data of the data management part (10) not relating to the base part (22), the state determination part (30) is redefined such that only the state transition command by the base part (22) is determined as a final state transition.

11. The vehicle control device (1) according to claim 10, wherein, when the error judgement part (60) redefines the state determination part (30) when it is determined that the data management part (10) is in an abnormal state on a basis of the data of the data management part (10) not relating to the base part (22), the state determination part (30) outputs the start command and the stop command to the module group (50) with a state transition by the base part (22) as a final state transition.

12. The vehicle control device (1) according to claim 11, wherein when the state transition of the customization part (21) becomes the final state transition, the error judgement part (60) specifies data of a corresponding part to be updated in the data management part (10) based on the start command to the module group output by the state determination part (30) and diagnoses an abnormality of the data of the corresponding part.

13. The vehicle control device (1) according to claim 12, wherein when the data of the corresponding part deviates from a prescribed range, the error judgement part (60) redefines the state determination part (30) such that only the state transition command by the base part (22) is determined as a final state transition.

14. The vehicle control device (1) according to claim 13, wherein when the data of the corresponding part deviates from a prescribed range, the error judgement part (60) feeds back the abnormality to the customization part (21).

## Patentansprüche

1. Fahrzeugsteuereinrichtung (1), die eine Vielzahl von Modulgruppen (50), wobei eine Modulgruppe (50) zumindest ein Basisfunktionsmodul (51-0) und ein Zusatzfunktionsmodul (52-0) umfasst, und einen Datenverwaltungsteil (10), der Daten der Modulgruppen (50) verwaltet, umfasst, wobei die Fahrzeugsteuereinrichtung (1) umfasst:
einen Modulverwaltungsteil (20), der einen Basisteil (22), der einen Zustandsübergangsbefehl zum Betreiben einer vorbestimmten Basisfunktion auf der Grundlage von Daten von dem Datenverwaltungsteil (10) ausgibt, und einen Anpassungsteil (21), der einen Zustandsübergangsbefehl zum Betreiben einer Zusatzfunktion ausgibt, umfasst;
einen Zustandsermittlungsteil (30), der einen aktuellen Zustand eines Funktionsmoduls der Modulgruppen (50) durch Auswählen oder Nichtauswählen des Zustandsübergangsbefehls von dem Basisteil (22) und des Zustandsübergangsbefehls von dem Anpassungsteil (21) basierend auf einer Definitionsdatei ermittelt, einen Startbefehl oder einen Stoppbefehl der Modulgruppe (50) auf der Grundlage des ermittelten Zustands ermittelt und den Befehl an den Datenverwaltungsteil (10) ausgibt; und
einen Modulausführungsteil (40), der alle Modulgruppen (50) aufruft,
wobei die aufgerufene Modulgruppe (50) den durch den Zustandsermittlungsteil (30) ermittelten Startbefehl und Stoppbefehl von dem Datenverwaltungsteil (10) liest und ein Starten und Stoppen in Bezug auf den Startbefehl oder den Stoppbefehl ausführt.

2. Fahrzeugsteuereinrichtung (1) nach Anspruch 1, wobei ein finaler Zustandsübergang auf der Grundlage des Zustandsübergangsbefehls des Basisteils (22) und des Zustandsübergangsbefehls des Anpassungsteils (21) gebildet wird.

3. Fahrzeugsteuereinrichtung (1) nach Anspruch 2, wobei der Zustandsermittlungsteil (30) einen aktuellen Zustand und einen Modulstartbefehl und einen Stoppbefehl an den Datenverwaltungsteil (10) ausgibt.

4. Fahrzeugsteuereinrichtung (1) nach Anspruch 1, wobei die Basisfunktion von dem Basisteil (22) unabhängig arbeitet.

5. Fahrzeugsteuereinrichtung (1) nach einem der Ansprüche 1 bis 4, wobei
der Basisteil (22) einen vorab entworfenen Zustandsübergang zum Ausgeben des Zustandsübergangsbefehls zum Betreiben der Basisfunktion aufweist,
der Anpassungsteil (21) einen vorab entworfenen Zustandsübergang zum Ausgeben des Zustandsübergangsbefehls zum Betreiben der Zusatzfunktion aufweist, und
ein vorbestimmter finaler Zustandsübergang gebildet wird, indem der Zustandsübergang des Basisteils (22) und der Zustandsübergang des Anpassungsteils (21) durch den Zustandsermittlungsteil (30) virtuell integriert werden.

6. Fahrzeugsteuereinrichtung (1) nach einem der Ansprüche 1 bis 4, wobei
der Basisteil (22) einen vorab entworfenen Zustandsübergang zum Ausgeben des Zustandsübergangsbefehls zum Betreiben der Basisfunktion aufweist,
der Anpassungsteil (21) einen sich dynamisch ändernden Zustandsübergang aufweist, und
ein gewünschter finaler Zustandsübergang durch virtuelles Integrieren des Zustandsübergangs des Basisteils (22) und des Zustandsübergangs des Anpassungsteils (21) durch den Zustandsermittlungsteil (30) gebildet wird.

7. Fahrzeugsteuereinrichtung (1) nach Anspruch 6, wobei der sich dynamisch ändernde Zustandsübergang des Anpassungsteils (21) eine künstliche Intelligenz oder eine Lernfunktion umfasst.

8. Fahrzeugsteuereinrichtung (1) nach Anspruch 7, wobei der Zustandsermittlungsteil (30) den Zustandsübergang des Anpassungsteils (21) als finalen Zustandsübergang in Bezug auf eine Situation, in der der Zustandsübergang nicht als der Zustandsübergang des Basisteils (22) definiert ist, ermittelt.

9. Fahrzeugsteuereinrichtung (1) nach einem der Ansprüche 1 bis 4, ferner umfassend
einen Fehlerbeurteilungsteil (60), der, wenn Daten des Datenverwaltungsteils (10) von einem vorgeschriebenen Bereich abweichen, eine Unregelmäßigkeit des Modulverwaltungsteils (20) und des Datenverwaltungsteils (10) detektiert und einen Typ der Unregelmäßigkeit unterscheidet.

10. Fahrzeugsteuereinrichtung (1) nach Anspruch 9, wobei, wenn der Fehlerbeurteilungsteil (60) auf der Grundlage der Daten des Datenverwaltungsteils (10), die nicht mit dem Basisteil (22) in Beziehung stehen, ermittelt, dass sich der Datenverwaltungsteil (10) in einem Unregelmäßigkeitszustand befindet, der Zustandsermittlungsteil (30) derart umdefiniert wird, dass nur der Zustandsübergangsbefehl von dem Basisteil (22) als finaler Zustandsübergang ermittelt wird.

11. Fahrzeugsteuereinrichtung (1) nach Anspruch 10, wobei, wenn der Fehlerbeurteilungsteil (60) den Zustandsermittlungsteil (30) umdefiniert, wenn auf der Grundlage der Daten des Datenverwaltungsteils (10), die nicht mit dem Basisteil (22) in Beziehung stehen, ermittelt wird, dass sich der Datenverwaltungsteil (10) in einem Unregelmäßigkeitszustand befindet, der Zustandsermittlungsteil (30) den Startbefehl und den Stoppbefehl mit einem Zustandsübergang von dem Basisteil (22) als finaler Zustandsübergang an die Modulgruppe (50) ausgibt.

12. Fahrzeugsteuereinrichtung (1) nach Anspruch 11, wobei, wenn der Zustandsübergang des Anpassungsteils (21) der finale Zustandsübergang wird, der Fehlerbeurteilungsteil (60) Daten eines entsprechenden Teils zur Aktualisierung in dem Datenverwaltungsteil (10) basierend auf dem Startbefehl für die Modulgruppe, der durch den Zustandsermittlungsteil (30) ausgegeben wird, spezifiziert und eine Unregelmäßigkeit der Daten des entsprechenden Teils diagnostiziert.

13. Fahrzeugsteuereinrichtung (1) nach Anspruch 12, wobei, wenn die Daten des entsprechenden Teils von einem vorgeschriebenen Bereich abweichen, der Fehlerbeurteilungsteil (60) den Zustandsermittlungsteil (30) derart umdefiniert, dass nur der Zustandsübergangsbefehl von dem Basisteil (22) als finaler Zustandsübergang ermittelt wird.

14. Fahrzeugsteuereinrichtung (1) nach Anspruch 13, wobei, wenn die Daten des entsprechenden Teils von einem vorgeschriebenen Bereich abweichen, der Fehlerbeurteilungsteil (60) die Unregelmäßigkeit zu dem Anpassungsteil (21) zurückführt.

## Revendications

1. Dispositif de commande de véhicule (1) qui inclut une pluralité de groupes de modules (50), dans lequel un groupe de modules (50) comprend au moins un module de fonction de base (51-0) et un module de fonction supplémentaire (52-0), et une partie de gestion de données (10) qui gère les données des groupes de modules (50), le dispositif de commande de véhicule (1) comprenant :
une partie de gestion de modules (20) qui inclut une partie de base (22) qui délivre un ordre de transition d'état pour faire fonctionner une fonction de base prédéterminée sur la base de données provenant de la partie de gestion de données (10) et une partie de personnalisation (21) qui délivre un ordre de transition d'état pour faire fonctionner une fonction supplémentaire ;
une partie de détermination d'état (30) qui détermine un état actuel d'un module de fonction des groupes de modules (50) en sélectionnant ou ne sélectionnant pas l'ordre de transition d'état provenant de la partie de base (22) et l'ordre de transition d'état provenant de la partie de personnalisation (21) sur la base d'un fichier de définition, détermine un ordre de démarrage ou un ordre d'arrêt du groupe de modules (50) sur la base de l'état déterminé, et délivre l'ordre à la partie de gestion de données (10) ; et
une partie d'exécution de modules (40) qui appelle tous les groupes de modules (50),
dans lequel le groupe de modules appelé (50) lit l'ordre de démarrage et l'ordre d'arrêt déterminés par la partie de détermination d'état (30) à partir de la partie de gestion de données (10) et exécute le démarrage et l'arrêt en se référant à l'ordre de démarrage ou à l'ordre d'arrêt.

2. Dispositif de commande de véhicule (1) selon la revendication 1, dans lequel une transition d'état finale est formée sur la base de l'ordre de transition d'état de la partie de base (22) et de l'ordre de transition d'état de la partie de personnalisation (21).

3. Dispositif de commande de véhicule (1) selon la revendication 2, dans lequel la partie de détermination d'état (30) délivre un état actuel ainsi qu'un ordre de démarrage de module et un ordre d'arrêt à la partie de gestion de données (10).

4. Dispositif de commande de véhicule (1) selon la revendication 1, dans lequel la fonction de base par la partie de base (22) fonctionne indépendamment.

5. Dispositif de commande de véhicule (1) selon l'une quelconque des revendications 1 à 4, dans lequel
la partie de base (22) a une transition d'état conçue à l'avance pour délivrer l'ordre de transition d'état pour faire fonctionner la fonction de base,
la partie de personnalisation (21) a une transition d'état conçue à l'avance pour délivrer l'ordre de transition d'état pour faire fonctionner la fonction supplémentaire, et
une transition d'état finale prédéterminée est formée en intégrant virtuellement la transition d'état de la partie de base (22) et la transition d'état de la partie de personnalisation (21) par la partie de détermination d'état (30).

6. Dispositif de commande de véhicule (1) selon l'une quelconque des revendications 1 à 4, dans lequel
la partie de base (22) a une transition d'état conçue à l'avance pour délivrer l'ordre de transition d'état pour faire fonctionner la fonction de base,
la partie de personnalisation (21) a une transition d'état changeant dynamiquement, et
une transition d'état finale souhaitée est formée en intégrant virtuellement la transition d'état de la partie de base (22) et la transition d'état de la partie de personnalisation (21) par la partie de détermination d'état (30).

7. Dispositif de commande de véhicule (1) selon la revendication 6, dans lequel la transition d'état changeant dynamiquement de la partie de personnalisation (21) est une intelligence artificielle ou une fonction d'apprentissage.

8. Dispositif de commande de véhicule (1) selon la revendication 7, dans lequel la partie de détermination d'état (30) détermine la transition d'état de la partie de personnalisation (21) comme une transition d'état finale par rapport à une situation dans laquelle la transition d'état n'est pas définie comme la transition d'état de la partie de base (22).

9. Dispositif de commande de véhicule (1) selon l'une quelconque des revendications 1 à 4, comprenant en outre,
lorsque des données de la partie de gestion de données (10) s'écartent d'une plage prescrite, une partie de jugement d'erreur (60) qui détecte une anomalie de la partie de gestion de modules (20) et de la partie de gestion de données (10) et discrimine un type d'anomalie.

10. Dispositif de commande de véhicule (1) selon la revendication 9, dans lequel, lorsque la partie de jugement d'erreur (60) détermine que la partie de gestion de données (10) est dans un état anormal sur la base des données de la partie de gestion de données (10) ne se rapportant pas à la partie de base (22), la partie de détermination d'état (30) est redéfinie de sorte que seul l'ordre de transition d'état par la partie de base (22) soit déterminé comme une transition d'état finale.

11. Dispositif de commande de véhicule (1) selon la revendication 10, dans lequel, lorsque la partie de jugement d'erreur (60) redéfinit la partie de détermination d'état (30) lorsqu'il est déterminé que la partie de gestion de données (10) est dans un état anormal sur la base des données de la partie de gestion de données (10) ne se rapportant pas à la partie de base (22), la partie de détermination d'état (30) délivre l'ordre de démarrage et l'ordre d'arrêt au groupe de modules (50) avec une transition d'état par la partie de base (22) comme une transition d'état finale.

12. Dispositif de commande de véhicule (1) selon la revendication 11, dans lequel, lorsque la transition d'état de la partie de personnalisation (21) devient la transition d'état finale, la partie de jugement d'erreur (60) spécifie des données d'une partie correspondante à mettre à jour dans la partie de gestion de données (10) sur la base de l'ordre de démarrage destiné au groupe de modules délivré par la partie de détermination d'état (30) et diagnostique une anomalie des données de la partie correspondante.

13. Dispositif de commande de véhicule (1) selon la revendication 12, dans lequel, lorsque les données de la partie correspondante s'écartent d'une plage prescrite, la partie de jugement d'erreur (60) redéfinit la partie de détermination d'état (30) de sorte que seul l'ordre de transition d'état par la partie de base (22) soit déterminé comme une transition d'état finale.

14. Dispositif de commande de véhicule (1) selon la revendication 13, dans lequel, lorsque les données de la partie correspondante s'écartent d'une plage prescrite, la partie de jugement d'erreur (60) renvoie l'anomalie à la partie de personnalisation (21).
